# EUROPÄISCHE PATENTSCHRIFT

(11) **EP 2 924 531 B1**
(45) Veröffentlichungstag und Bekanntmachung des Hinweises auf die Patenterteilung: **08.05.2019**
(21) Anmeldenummer: 15156109.9
(22) Anmeldetag: 23.02.2015
(51) Int. Cl.: F16K 99/00, B01L 3/00, G05D 7/06

(54) **MIKROFLUIDISCHE VORRICHTUNG UND VERFAHREN ZUM STEUERN EINES FLUIDFLUSSES IN EINER MIKROFLUIDISCHEN VORRICHTUNG**
MICROFLUIDIC DEVICE AND METHOD FOR CONTROLLING A FLUID FLOW IN A MICROFLUIDIC DEVICE
DISPOSITIF MICROFLUIDIQUE ET PROCÉDÉ DE COMMANDE D'UN FLUX DE FLUIDE DANS UN DISPOSITIF MICROFLUIDIQUE

(30) Priorität: 25.03.2014 DE 102014205541
(43) Veröffentlichungstag der Anmeldung: 30.09.2015
(73) Patentinhaber: ROBERT BOSCH GMBH, 70442 Stuttgart (DE)
(72) Erfinder: Brettschneider, Thomas, 71229 Leonberg (DE); Rupp, Jochen, 70178 Stuttgart (DE)

(56) Entgegenhaltungen:
- EP-A2- 2 279 789
- WO-A2-2004/028955
- US-A1- 2007 204 926

## Beschreibung

### Stand der Technik

Die vorliegende Erfindung bezieht sich auf eine mikrofluidische Vorrichtung, ferner auf ein Verfahren zum Steuern eines Fluidflusses in einer mikrofluidischen Vorrichtung sowie auf ein entsprechendes Computerprogramm.

Zur Steuerung von mikrofluidischen Abläufen auf Lab-on-Chip-Systemen (LoC-Systemen) bzw. Chiplabors können in das System integrierte Bauteile, wie beispielsweise Ventile, die fluidische Pfade öffnen oder schließen, beispielsweise Membranventile, sowie Membranpumpen zur Anwendung kommen. Üblicherweise kann hierzu für jedes unabhängig zu steuernde Bauteil ein pneumatischer Anschluss bzw. eine pneumatische Schnittstelle zur Außenwelt vorgesehen sein. Die US 2011/0136252 A1 offenbart eine mikrofluidische Vorrichtung mit einem mikrofluidischen Multiplexer. Die WO 2004/028955 A2 offenbart ein mikrofluidisches Gerät mit einer Mehrzahl von mikrofluidischen Flußkanälen und einer Mehrzahl von mikrofluidischen Steuerkanälen.

### Offenbarung der Erfindung

Vor diesem Hintergrund werden mit dem hier vorgestellten Ansatz eine mikrofluidische Vorrichtung, ein Verfahren zum Steuern eines Fluidflusses in einer mikrofluidischen Vorrichtung, weiterhin eine Vorrichtung, die dieses Verfahren verwendet, sowie schließlich ein entsprechendes Computerprogramm gemäß den Hauptansprüchen vorgestellt. Vorteilhafte Ausgestaltungen ergeben sich aus den jeweiligen Unteransprüchen und der nachfolgenden Beschreibung.

Gemäß Ausführungsformen der Erfindung kann insbesondere eine mikrofluidische Multiplexingstruktur bzw. ein Ansteuerungsverfahren für mikrofluidisches Multiplexing bereitgestellt werden. Die Multiplexingstruktur bzw. das Ansteuerungsverfahren kann beispielsweise auf einem Multiplexer mit M Signalpfaden und N Steuerpfaden bzw. Kontrollpfaden basieren. Dabei kann insbesondere eine Druckzufuhr für alle anzusteuernden Beeinflussungseinrichtungen bzw. Zielelementen, z. B. Ventile und/oder Verdrängungskammern von Membranpumpen, von jeweils einem Steuerventil bzw. Kontrollventil gesteuert bzw. reguliert werden. Ein Durchtakten der Steuerpfade beispielsweise erlaubt es, jeweils einen gewünschten Druckzustand der Signalpfade an jeweilige Zielelemente weiterzuleiten. Insbesondere durch Einführen einer Druckhaltezeit können einzelne Taktzustände bei Bedarf übersprungen werden, um eine effektive Taktfrequenz zu erhöhen. In speziellen Schaltszenarien können so insbesondere auch Schritte eingespart werden, um innerhalb der Druckhaltezeit M verschiedene Zielelemente mit besonders hoher Frequenz umzuschalten.

Vorteilhafterweise können gemäß Ausführungsformen der Erfindung insbesondere eine mikrofluidische Vorrichtung mit einer Multiplexing-Anordnung und auch entsprechende Ansteuerungsverfahren eingesetzt werden, um mikrofluidisches bzw. mikropneumatisches Multiplexing mit verkürzten Schaltzeiten durchführen zu können. Auf diese Weise können als Beeinflussungseinrichtungen zusätzlich zu Membranventilen auch Membranpumpen angesteuert werden, welche in der Regel höhere Aktuierungsfrequenzen benötigen. So können nicht nur Ventile angesteuert werden, um fluidische Abläufe zu steuern, sondern insbesondere aufgrund kurzer Schaltzeiten gemäß Ausführungsformen der Erfindung auch integrierte Membranpumpen, die beispielsweise Pumpfrequenzen von 1 bis 10 Hertz benötigen. Mit solchen Ansteuerungsverfahren bzw. Multiplex-Strukturen ist es zum Beispiel möglich, unter Multiplex-Bedingungen hohe Schaltfrequenzen für die Beeinflussungseinrichtungen bereitzustellen. Zusätzlich kann gemäß Ausführungsformen der Erfindung insbesondere erreicht werden, dass im Fall einer Membranpumpe als Beeinflussungseinrichtung deren Verdrängungskammer voll ausgelenkt wird. Dies wird beispielsweise benötigt, um ein spezifiziertes Fördervolumen einer Membranpumpe möglichst exakt zu erreichen. Die Ansteuerungsverfahren bzw. Multiplex-Strukturen können sich damit insbesondere auch zum Ansteuern von Membranpumpen als Beeinflussungseinrichtungen in einer mikrofluidischen Vorrichtung eignen. Dabei kann auch ein Abmessen bzw. Metering von Volumina ermöglicht werden. Zudem können bei dem Multiplexingansatz gemäß Ausführungsformen der Erfindung beispielsweise externe Pilotventile zum Umschalten von Druckzuständen durch eine verringerte Anzahl von Schaltvorgängen entlastet werden, wobei eine Anzahl notwendiger Schaltvorgänge der Pilotventile deutlich verringert werden kann. Hierdurch kann eine höhere Lebensdauer der Pilotventile erzielt werden bzw. es können günstigere Pilotventile verwendet werden. Somit ergeben sich erweiterte Einsatzmöglichkeiten, verringerte Kosten sowie Verschleißerscheinungen.

Es wird eine mikrofluidische Vorrichtung vorgestellt, die eine Anzahl von Beeinflussungseinrichtungen zum Beeinflussen eines Fluidflusses in der mikrofluidischen Vorrichtung aufweist, wobei die mikrofluidische Vorrichtung folgende Merkmale aufweist:
eine Anzahl von Signalpfaden zum Ansteuern der Beeinflussungseinrichtungen, wobei jeder Signalpfad zumindest eine Anzahl von Zweigpfaden zu zumindest einer der Beeinflussungseinrichtungen umfasst;
eine Anzahl von Steuerventilen, die in zumindest einigen Zweigpfaden der Signalpfade angeordnet sind, wobei zumindest eines der Anzahl von Steuerventilen einem Zweigpfad zugeordnet ist; und
eine Anzahl von Steuerpfaden zum Schalten zumindest einiger der Steuerventile, wobei zumindest ein Steuerpfad Steuerventilen unterschiedlicher Signalpfade zugeordnet ist.

Ein Steuerpfad kann einen oder mehrere (zusätzliche) Zweigpfade aufweisen, die "ins Nichts" laufen, also beispielsweise zu keiner Beeinflussungseinrichtung führen. Ferner können zwei oder mehr Zweigpfade zu einer einzigen Beeinflussungseinrichtung führen.

Gemäß einer Ausführungsform kann die mikrofluidische Vorrichtung eine Anzahl von M*N Beeinflussungseinrichtungen zum Beeinflussen eines Fluidflusses in der mikrofluidischen Vorrichtung aufweisen, wobei die mikrofluidische Vorrichtung folgende Merkmale aufweist:
eine Anzahl von M Signalpfaden zum Ansteuern der Beeinflussungseinrichtungen, wobei sich jeder Signalpfad in eine Anzahl von N Zweigpfaden zu einer Teilanzahl von N Beeinflussungseinrichtungen der Anzahl von M*N Beeinflussungseinrichtungen verzweigt;
eine Anzahl von M*N Steuerventilen, die in den Zweigpfaden der Signalpfade angeordnet sind, wobei jedes Steuerventil einem Zweigpfad zugeordnet ist; und
eine Anzahl von N Steuerpfaden zum Schalten der Steuerventile, wobei jeder Steuerpfad einer Teilanzahl von M Steuerventilen der Anzahl von M*N Steuerventilen unterschiedlicher Signalpfade zugeordnet ist.

Die mikrofluidische Vorrichtung kann beispielsweise in Verbindung mit analytischen Systemen, insbesondere für mikrofluidische Lab-on-Chip-Systeme zur Umweltanalytik oder medizinischen Diagnostik und in-vitro-Diagnostiksysteme verwendet werden. Bei der mikrofluidischen Vorrichtung kann es sich um ein mikrofluidisches System bzw. eine analytische Vorrichtung handeln, insbesondere ein mikrofluidisches Lab-on-Chip bzw. Chiplabor zur medizinischen Diagnostik, mikrobiologischen Diagnostik oder Umweltanalytik. Der Fluidfluss kann eine Probe in Gestallt einer zu analysierenden Flüssigkeit oder eines zu analysierenden Gases betreffen. Beispielsweise kann M gleich 2 oder größer als 2 sein. Beispielsweise kann N gleich drei oder größer als 3 sein. Unter einer Teilanzahl kann eine Menge verstanden werden, die kleiner als eine Gesamtmenge ist. Beispielsweise können insgesamt M*N Beeinflussungseinrichtungen vorhanden sein, die genannte Teilanzahl von N Beeinflussungseinrichtungen umfasst jedoch nur eine Menge von N Beeinflussungseinrichtungen, also weniger als die Gesamtmenge von M*N Beeinflussungseinrichtungen. Zweigpfade eines Signalpfades können nach der Verzweigung weiterhin als Teil des Signalpfads aufgefasst werden.

Gemäß einer Ausführungsform kann eine Anzahl von beispielsweise M Signalpfad-Schnittstellen zum Anlegen von Zielzuständen an die Signalpfade vorgesehen sein. Dabei kann jede Signalpfad-Schnittstelle einem der beispielsweise M Signalpfade zugeordnet sein. Auch kann eine Anzahl von beispielsweise N Steuerpfad-Schnittstellen zum Schalten der Steuerventile über die Steuerpfade vorgesehen sein. Dabei kann jede Steuerpfad-Schnittstelle einem der beispielsweise N Steuerpfade zugeordnet sein. Die Schnittstellen können insbesondere als pneumatische Schnittstellen bzw. Anschlüsse der mikrofluidischen Vorrichtung ausgeführt sein. Bei einem Zielzustand kann es sich um einen Druckzustand bzw. einen Druckwert oder Druckbetrag handeln. Die Steuerventile können in einen Freigabezustand, in dem ein zugeordneter Zweigpfad freigegeben ist, oder in einen Sperrzustand schaltbar sein, in dem ein zugeordneter Zweigpfad gesperrt ist. Eine solche Ausführungsform bietet den Vorteil, dass somit im Allgemeinen beispielsweise M*N Beeinflussungseinrichtungen über lediglich beispielsweise M+N Schnittstellen angesprochen bzw. angesteuert werden können. Eine solche vorteilhafte Verringerung der Anzahl von Schnittstellen erleichtert auch eine Aufnahme der mikrofluidischen Vorrichtung in einem Analysesystem, wobei somit eine geringere Anzahl von Schnittstellen fluiddicht an das Analysesystem anzukoppeln ist.

Insbesondere können die Beeinflussungseinrichtungen Ventile und zusätzlich oder alternativ Fördereinrichtungen aufweisen. Es können die Signalpfade als Fluidleitungen ausgeformt sein. Auch können die Steuerpfade als Fluidleitungen ausgeformt sein. Zusätzlich oder alternativ können die Steuerventile als Membranventile ausgeführt sein. Eine solche Multiplexingstruktur kann insbesondere einen polymeren Mehrschichtaufbau aufweisen, der starre Polymersubstrate, die durch eine flexible Polymermembran getrennt sind, sowie Membranventile und Membranpumpe umfasst. Eine solche Ausführungsform bietet den Vorteil, dass die mikrofluidische Vorrichtung hierbei besonders zuverlässig, platzsparend, unaufwendig und kostengünstig ist.

Zur Steuerung von mikrofluidischen Abläufen auf Lab-on-Chip-Systemen bzw. LoC-Systemen können in die Systeme integrierte Beeinflussungseinrichtungen, wie beispielsweise Ventile, die fluidische Pfade öffnen oder schließen, beispielsweise Membranventile, sowie Membranpumpen verwendet werden. Gemäß Ausführungsformen der Erfindung wird hierzu nicht für jede unabhängig zu steuernde Beeinflussungseinrichtung eine Schnittstelle bzw. ein pneumatischer Anschluss benötigt, um die Beeinflussungseinrichtung anzusteuern, beispielsweise ein Ventil zu öffnen oder zu schließen, d. h. das LoC-System kann weniger Schnittstellen zur Außenwelt aufweisen als unabhängige Beeinflussungseinrichtungen verbaut sind. Dies gilt ebenso, wenn zu Ventilen noch Membranpumpen hinzukommen, welche üblicherweise aus einer pneumatisch aktuierten Verdrängungskammer und zwei Ventilen bestehen können. Je weniger Schnittstellen die mikrofluidische Vorrichtung aufweist, desto einfacher ist es, diese Schnittstellen dicht mit einer externen Steuereinheit zu verbinden. Somit kann eine Obergrenze für eine Anzahl von in der mikrofluidischen Vorrichtung verbaubaren Beeinflussungseinrichtungen und damit auch eine Obergrenze für eine Komplexität darstellbarer Abläufe auf einem LoC vorteilhaft erhöht werden. Um mehr unabhängige Beeinflussungseinrichtungen in einer mikrofluidischen Vorrichtung zu realisieren als Schnittstellen zur Außenwelt verfügbar sind, wird der Multiplexing-Ansatz gemäß Ausführungsformen der Erfindung vorgestellt. Hierbei können beispielsweise die Steuerventile, insbesondere als zusätzliche pneumatische Ventile, verwendet werden, um eine Druckzufuhr in Richtung der Beeinflussungseinrichtungen zu steuern und gegebenenfalls zu halten, wenn eine externe Druckzufuhr nicht mehr anliegt.

Es wird auch ein Verfahren zum Steuern eines Fluidflusses in einer mikrofluidischen Vorrichtung vorgestellt, die eine Anzahl von Beeinflussungseinrichtungen zum Beeinflussen eines Fluidflusses in der mikrofluidischen Vorrichtung, eine Anzahl von Signalpfaden zum Ansteuern der Beeinflussungseinrichtungen, wobei jeder Signalpfad zumindest eine Anzahl von Zweigpfaden zu zumindest einer der Beeinflussungseinrichtungen umfasst, eine Anzahl von Steuerventilen, die in zumindest einigen der Zweigpfade der Signalpfade angeordnet sind, wobei zumindest eines der Anzaahl von Steuerventilen einem Zweigpfad zugeordnet ist, und eine Anzahl von Steuerpfaden zum Schalten zumindest einiger der Steuerventile aufweist, wobei zumindest ein Steuerpfad Steuerventilen unterschiedlicher Signalpfade zugeordnet ist, , wobei das Verfahren folgende Schritte aufweist:
Schalten zumindest einer Teilmenge der Steuerventile über zumindest eine Teilmenge der Steuerpfade, um die Zweigpfade der Signalpfade zum Ansteuern der Beeinflussungseinrichtungen individuell freizugeben oder zu sperren; und
Anlegen von Zielzuständen an zumindest eine Teilmenge der Signalpfade, um in den Beeinflussungseinrichtungen selektiv die Zielzustände zu bewirken, um den Fluidfluss zu steuern.

Das Verfahren kann in Verbindung mit einer Ausführungsform der vorstehend genannten mikrofluidischen Vorrichtung vorteilhaft ausgeführt werden, um einen Fluidfluss in der mikrofluidischen Vorrichtung zu steuern.

Gemäß einer Ausführungsform kann die mikrofluidischen Vorrichtung eine Anzahl von M*N Beeinflussungseinrichtungen zum Beeinflussen des Fluidflusses, eine Anzahl von M Signalpfaden zum Ansteuern der Beeinflussungseinrichtungen, wobei sich jeder Signalpfad in eine Anzahl von N Zweigpfaden zu einer Teilanzahl von N Beeinflussungseinrichtungen verzweigt, eine Anzahl von M*N Steuerventilen, die in den Zweigpfaden der Signalpfade angeordnet sind, wobei jedes Steuerventil einem Zweigpfad zugeordnet ist, und eine Anzahl von N Steuerpfaden zum Schalten der Steuerventile aufweisen, wobei jeder Steuerpfad einer Teilanzahl von M Steuerventilen unterschiedlicher Signalpfade zugeordnet sein kann.

Gemäß einer Ausführungsform kann innerhalb eines Zyklus der Schritt des Schaltens innerhalb eines Toleranzbereichs zeitgleich mit dem Schritt des Anlegens, vor dem Schritt des Anlegens oder vor und nach dem Schritt des Anlegens ausgeführt werden. Hierbei kann der Zyklus wiederholt ausgeführt werden. Eine solche Ausführungsform bietet den Vorteil, dass je nach Anwendungsfall vorteilhaft abgestimmte Zyklen der Schritte ausgeführt werden können, um anzusteuernde Beeinflussungseinrichtungen mit den Zielzuständen zu beaufschlagen.

Dabei kann innerhalb eines Takts eine Anzahl von beispielsweise N Zyklen ausgeführt werden. Hierbei können in jedem der Zyklen eines Takts im Schritt des Schaltens die Steuerventile eines unterschiedlichen ausgewählten Steuerpfads einmal geschaltet werden, um die den Steuerventilen des ausgewählten Steuerpfads zugeordneten Zweigpfade der Signalpfade freizugeben. Somit können innerhalb eines Takts alle der Steuerpfade zyklisch nacheinander einmal angesprochen werden, um die jeweiligen Zweigpfade der Signalpfade zyklisch nacheinander freizugeben. Wenn in einem Zyklus der Schritt des Schaltens vor und nach dem Schritt des Anlegens ausgeführt wird, so können in einem ersten Schritt des Schaltens vor dem Schritt des Anlegens alle Steuerpfade so geschaltet werden, dass alle Zweigpfade gesperrt sind, wobei in einem zweiten Schritt des Schaltens nach dem Schritt des Anlegens die Steuerventile eines unterschiedlichen ausgewählten Steuerpfads einmal geschaltet werden können, um die den Steuerventilen des ausgewählten Steuerpfads zugeordneten Zweigpfade der Signalpfade freizugeben. Eine solche Ausführungsform bietet den Vorteil, dass ein derartiges Durchtakten bzw. zyklisches Durchlaufen der Steuerpfade es auf einfache und zuverlässige Weise ermöglicht, jeweils lediglich erwünschte Zielzustände der Signalpfade an die Beeinflussungseinrichtungen weiterzuleiten.

Ferner kann ein Schritt des Erfassens einer Änderung von Zielzuständen der Beeinflussungseinrichtungen, einer Änderung von Schaltzuständen der Steuerpfade und zusätzlich oder alternativ eines Ablaufs von definierbaren Haltezeiten von Zielzuständen vorgesehen sein. Dabei können der Schritt des Schaltens und der Schritt des Anlegens in Abhängigkeit von einer im Schritt des Erfassens erfassten Änderung und zusätzlich oder alternativ in Abhängigkeit von einem im Schritt des Erfassens erfassten Ablauf durchgeführt werden. Hierbei können der Schritt des Schaltens und der Schritt des Anlegens in Abhängigkeit von einer im Schritt des Erfassens erfassten Änderung und zusätzlich oder alternativ in Abhängigkeit von einem im Schritt des Erfassens erfassten Ablauf innerhalb zumindest eines Zyklus eines Taktes übersprungen werden, wenn keine Änderung eines Zielzustandes und/oder kein Ablauf eine Haltezeit erfasst wird. Eine solche Ausführungsform bietet den Vorteil, dass durch Berücksichtigen einer Haltezeit, beispielsweise einer Druckhaltezeit, einzelne Taktzustände bei Bedarf übersprungen werden können, um eine effektive Taktfrequenz zu erhöhen. In speziellen Schaltszenarien können außerdem Schritte eingespart werden, um innerhalb der Haltezeit M verschiedene Beeinflussungseinrichtungen mit besonders hoher Frequenz anzusteuern bzw. umzuschalten.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung und/oder Ansteuerung der Schritte des Verfahrens nach einer der vorstehend beschriebenen Ausführungsformen verwendet wird, insbesondere wenn das Programmprodukt auf einem Computer oder einer Vorrichtung ausgeführt wird.

Der hier vorgestellte Ansatz wird nachstehend anhand der beigefügten Zeichnungen beispielhaft näher erläutert. Es zeigen:
Fig. 1 eine schematische Darstellung einer mikrofluidischen Vorrichtung gemäß einem Ausführungsbeispiel der vorliegenden Erfindung;
Fig. 2 eine schematische Darstellung einer mikrofluidischen Vorrichtung gemäß einem Ausführungsbeispiel der vorliegenden Erfindung;
Fig. 3 ein Ablaufdiagramm eines Verfahrens gemäß einem Ausführungsbeispiel der vorliegenden Erfindung; und
Figuren 4 bis 7 Prozessablaufschemata gemäß Ausführungsbeispielen der vorliegenden Erfindung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

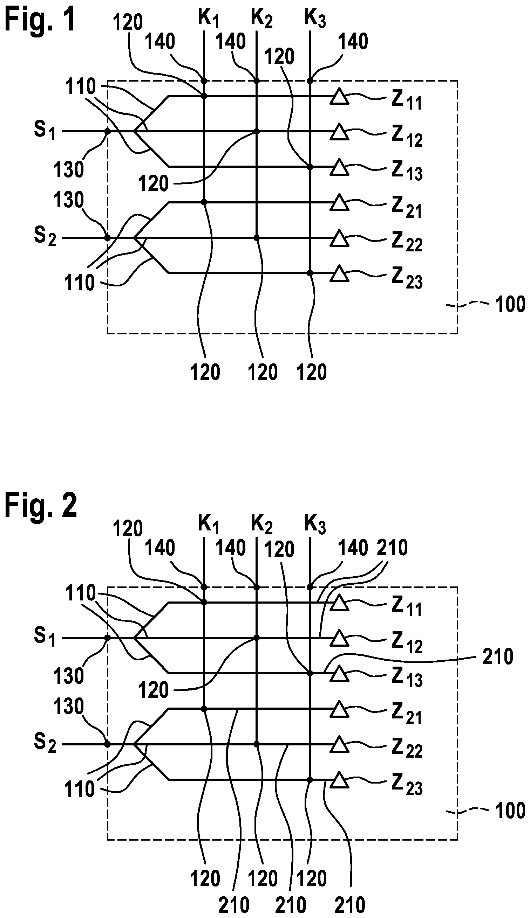

Fig. 1 zeigt eine schematische Darstellung einer mikrofluidischen Vorrichtung 100 gemäß einem Ausführungsbeispiel der vorliegenden Erfindung. Gezeigt sind von der mikrofluidischen Vorrichtung 100 gemäß dem in Fig. 1 dargestellten Ausführungsbeispiel der vorliegenden Erfindung drei Kontrollpfade bzw. Steuerpfade K₁, K₂ und K₃, zwei Signalpfade S₁ und S₂, sechs Zielelemente bzw. Beeinflussungseinrichtungen Z₁₁, Z₁₂, Z₁₃, Z₂₁, Z₂₂ und Z₂₃, sechs Zweigpfade 110, sechs Kontrollventile bzw. Steuerventile 120, zwei Signalpfad-Schnittstellen 130 und drei Steuerpfad-Schnittstellen 140. Bei der mikrofluidischen Vorrichtung 100 handelt es sich beispielsweise um ein Chiplabor bzw. LoC (engl. Lab-on-Chip). Dabei ist eine jeweilige Anzahl von Elementen der mikrofluidischen Vorrichtung 100 in Fig. 1 lediglich beispielhaft und kann gemäß anderen Ausführungsbeispielen von der dargestellten Anzahl abweichen.

Allgemein gesagt weist die mikrofluidische Vorrichtung 100 eine Anzahl von M*N Beeinflussungseinrichtungen Zᵢⱼ zum Beeinflussen eines Fluidflusses in der mikrofluidischen Vorrichtung 100 auf. Auch weist die mikrofluidische Vorrichtung 100 eine Anzahl von M Signalpfaden Sᵢ zum Ansteuern der Beeinflussungseinrichtungen Zᵢⱼ auf, wobei sich jeder Signalpfad Sᵢ in eine Anzahl von N Zweigpfaden 110 zu einer Teilanzahl von N Beeinflussungseinrichtungen Zᵢⱼ verzweigt. Ferner weist die mikrofluidische Vorrichtung 100 eine Anzahl von M*N Steuerventilen 120 auf, die in den Zweigpfaden 110 der Signalpfade Sᵢ angeordnet sind, wobei jedes Steuerventil 120 einem Zweigpfad 110 zugeordnet ist. Zudem weist die mikrofluidische Vorrichtung 100 eine Anzahl von N Steuerpfaden Kⱼ zum Schalten der Steuerventile 120 auf, wobei jeder Steuerpfad Kⱼ einer Teilanzahl von M Steuerventilen 120 unterschiedlicher Signalpfade Sᵢ zugeordnet ist. Weiterhin weist die mikrofluidische Vorrichtung 100 eine Anzahl von M Signalpfad-Schnittstellen 130 zum Anlegen von Zielzuständen an die Signalpfade Sᵢ auf, wobei jede Signalpfad-Schnittstelle 130 einem der M Signalpfade Sᵢ zugeordnet ist. Schließlich weist die mikrofluidische Vorrichtung 100 eine Anzahl von N Steuerpfad-Schnittstellen 140 zum Schalten der Steuerventile 120 über die Steuerpfade Kⱼ auf, wobei jede Steuerpfad-Schnittstelle 140 einem der N Steuerpfade Kⱼ zugeordnet ist. Gemäß dem in Fig. 1 dargestellten Ausführungsbeispiel der vorliegenden Erfindung gilt hierbei M=2 und N=3.

Gemäß dem in Fig. 1 dargestellten Ausführungsbeispiel der vorliegenden Erfindung verzweigt sich jeder der Signalpfade S₁ und S₂ in drei Zweigpfade 110. Jeder der Zweigpfade 110 erstreckt sich zu einer der Beeinflussungseinrichtungen Zᵢⱼ. Somit erstrecken sich die Zweigpfade 110 des ersten Signalpfades S₁ zu den Beeinflussungseinrichtungen Z₁₁, Z₁₂ und Z₁₃, wobei sich die Zweigpfade 110 des zweiten Signalpfades S₂ zu den Beeinflussungseinrichtungen Z₂₁, Z₂₂ und Z₂₃ erstrecken. Die Zweigpfade 110 repräsentieren Teilabschnitte der Signalpfade S₁ und S₂. Somit erstrecken sich die Signalpfade S₁ und S₂ zwischen den Signalpfad-Schnittstellen 130 und den Beeinflussungseinrichtungen Z₁₁, Z₁₂, Z₁₃, Z₂₁, Z₂₂ und Z₂₃. Dabei erstreckt sich der erste Signalpfad S₁ zwischen einer ersten der Signalpfad-Schnittstellen 130 und den Beeinflussungseinrichtungen Z₁₁, Z₁₂ und Z₁₃, wobei sich der zweite Signalpfades S₂ zwischen einer zweiten der Signalpfad-Schnittstellen 130 und den Beeinflussungseinrichtungen Z₂₁, Z₂₂ und Z₂₃ erstreckt.

Gemäß dem in Fig. 1 dargestellten Ausführungsbeispiel der vorliegenden Erfindung ist jedem der Zweigpfade 110 der Signalpfade S₁ und S₂ eines der Steuerventile 120 zugeordnet. Jeweils zwei Steuerventile 120, die zwei Zweigpfaden 110 unterschiedlicher Signalpfade S₁ und S₂ zugeordnet sind, sind in einem der Steuerpfade K₁, K₂ und K₃ angeordnet. Hierbei erstrecken sich die Steuerpfade K₁, K₂ und K₃ zwischen den Steuerpfad-Schnittstellen 140 und den jeweiligen Steuerventilen 120. Somit erstreckt sich ein erster Steuerpfad K₁ von einer ersten der Steuerpfad-Schnittstellen 140 über das Steuerventil 120 für den zu der Beeinflussungseinrichtung Z₁₁ führenden Zweigpfad 110 des ersten Signalpfads S₁ bis zu dem Steuerventil 120 für den zu der Beeinflussungseinrichtung Z₂₁ führenden Zweigpfad 110 des zweiten Signalpfads S₂. Ein zweiter Steuerpfad K₂ erstreckt sich von einer zweiten der Steuerpfad-Schnittstellen 140 über das Steuerventil 120 für den zu der Beeinflussungseinrichtung Z₁₂ führenden Zweigpfad 110 des ersten Signalpfads S₁ bis zu dem Steuerventil 120 für den zu der Beeinflussungseinrichtung Z₂₂ führenden Zweigpfad 110 des zweiten Signalpfads S₂. Ein dritter Steuerpfad K₃ erstreckt sich von einer dritten der Steuerpfad-Schnittstellen 140 über das Steuerventil 120 für den zu der Beeinflussungseinrichtung Z₁₃ führenden Zweigpfad 110 des ersten Signalpfads S₁ bis zu dem Steuerventil 120 für den zu der Beeinflussungseinrichtung Z₂₃ führenden Zweigpfad 110 des zweiten Signalpfads S₂.

Anders ausgedrückt zeigt Fig. 1 eine schematische Darstellung eines Ausführungsbeispiels der mikrofluidischen Vorrichtung 100 mit einer Multiplexingstruktur mit M=2 Signalpfaden S₁ und S₂ und N=3 Steuerpfaden K₁, K₂ und K₃, über die insgesamt sechs Beeinflussungseinrichtungen Z₁₁, Z₁₂, Z₁₃, Z₂₁, Z₂₂ und Z₂₃ ansteuerbar sind. An Kreuzungspunkten zwischen den Signalpfaden Sᵢ und Steuerpfaden Kⱼ sind die Steuerventile 120 angeordnet, die einen angelegten Zielzustand bzw. Signaldruck entweder an entsprechende der Beeinflussungseinrichtungen Z₁₁, Z₁₂, Z₁₃, Z₂₁, Z₂₂ und Z₂₃ weiterleiten, wenn die Steuerventile 120 geöffnet sind, oder einen eingeprägten Zielzustand bzw. Druckzustand an den Beeinflussungseinrichtungen Z₁₁, Z₁₂, Z₁₃, Z₂₁, Z₂₂ und Z₂₃ halten, wenn die Steuerventile geschlossen sind. In der mikrofluidischen Vorrichtung 100 integriert sind gemäß dem in Fig. 1 dargestellten Ausführungsbeispiel der vorliegenden Erfindung eine Fächerstruktur der sich in die jeweils drei Zweigpfade 110 verzweigenden Signalpfade S₁ und S₂, die Steuerventile 120 und die Beeinflussungseinrichtungen Zᵢⱼ. Die Signalpfade Sᵢ und die Steuerpfade Kⱼ sind über fünf Schnittstellen, die zwei Signalpfad-Schnittstellen 130 und die drei Steuerpfad-Schnittstellen 140, fluidisch mit einer externen Vorrichtung verbindbar, in der die mikrofluidische Vorrichtung 100 aufnehmbar ist. Eine solche externe Vorrichtung weist beispielsweise Pilotventile auf, welche einen gewünschten Druck auf die Signal- und Kontrollpfade legen. Somit lassen sich hierbei sechs Beeinflussungseinrichtungen Zᵢⱼ mit lediglich fünf Schnittstellen 130 und 140 steuern.

Gemäß einem Ausführungsbeispiel sind die Beeinflussungseinrichtungen Zᵢⱼ als Ventile und zusätzlich oder alternativ als Fördereinrichtungen ausgeführt. Hierbei sind die Signalpfade Sᵢ und zusätzlich oder alternativ die Steuerpfade Kⱼ als Fluidleitungen ausgeformt. Zusätzlich oder alternativ sind dabei die Steuerventile 120 als Membranventile ausgeführt.

Im Folgenden wird davon ausgegangen werden, dass die Steuerventile 120 in Form von pneumatischen Membranventilen ausgeführt sind, d. h. durch Verändern eines pneumatischen Drucks an den Kontrollpfaden Kⱼ öffnen oder schließen lassen, jedoch nicht auf Membranventile beschränkt sind. Auch wenn beispielhaft die Werte M=2 und N=3 vorgestellt sind, ist das vorstehend Beschriebene für beliebige Werte von M und N gültig. Schaltvorgänge innerhalb der mikrofluidischen Vorrichtung 100 bzw. eines mikrofluidischen Netzwerks sind verbunden mit Änderungen eines Druckzustands innerhalb der Pfade bzw. Kanäle. Durch fluidische Widerstände und Kapazitäten erfolgen solche Änderungen nicht instantan, sondern benötigen gewisse Umladezeiten. Daher werden eine Umladezeit Δtₛ der Signalpfade Sᵢ und eine Umladezeit Δt_{K} der Kontrollpfade Kⱼ eingeführt.

Fig. 2 zeigt eine schematische Darstellung einer mikrofluidischen Vorrichtung 100 gemäß einem Ausführungsbeispiel der vorliegenden Erfindung. Hierbei entspricht die mikrofluidische Vorrichtung 100 der in Fig. 1 gezeigten und beschriebenen mikrofluidischen Vorrichtung mit der Ausnahme, dass in Fig. 2 auch Abschnitte der Zweigpfade 110 zwischen den Steuerventilen 120 und den Beeinflussungseinrichtungen Z₁₁, Z₁₂, Z₁₃, Z₂₁, Z₂₂ und Z₂₃ als Zielzustandspfade 210 eingezeichnet und bezeichnet sind. Hierbei sind unter den Signalpfaden Sᵢ nur Pfadanteile zwischen den Signalpfad-Schnittstellen 130 und den Steuerventilen 120 zu verstehen, wobei Pfadanteile zwischen den Steuerventilen 120 und den Zielelementen Zᵢⱼ hierbei als Zielzustandspfade 210 bezeichnet werden. Die Zielzustandspfade 210 weisen eine Umladezeit Δt_{z} auf.

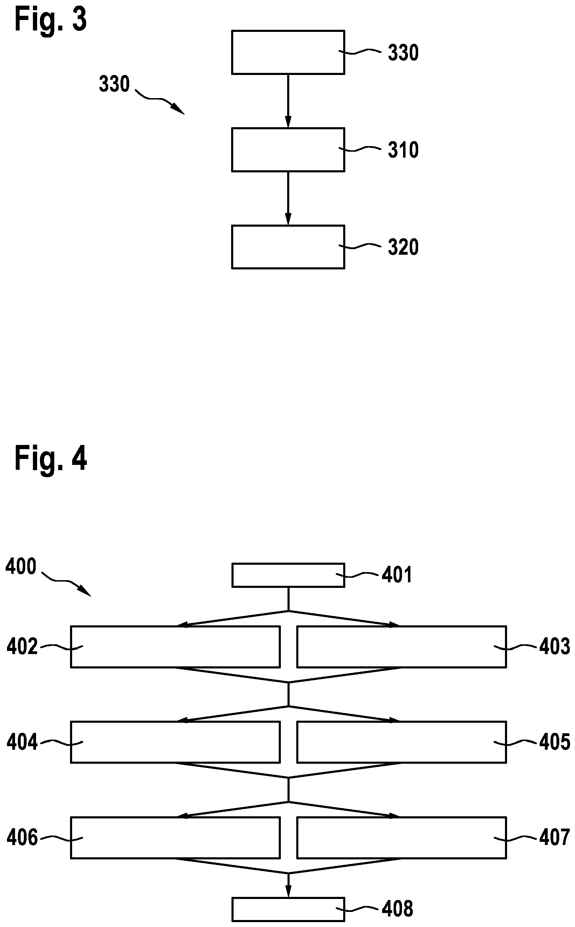

Fig. 3 zeigt ein Ablaufdiagramm eines Verfahrens 300 zum Steuern eines Fluidflusses in einer mikrofluidischen Vorrichtung gemäß einem Ausführungsbeispiel der vorliegenden Erfindung. Das Verfahren 300 ist in Verbindung mit bzw. unter Verwendung einer mikrofluidischen Vorrichtung wie der mikrofluidischen Vorrichtung aus Fig. 1 bzw. Fig. 2 ausführbar.

Somit ist das Verfahren 300 in Verbindung mit bzw. unter Verwendung einer mikrofluidischen Vorrichtung ausführbar, die eine Anzahl von M*N Beeinflussungseinrichtungen zum Beeinflussen des Fluidflusses, eine Anzahl von M Signalpfaden zum Ansteuern der Beeinflussungseinrichtungen, wobei sich jeder Signalpfad in eine Anzahl von N Zweigpfaden zu einer Teilanzahl von N Beeinflussungseinrichtungen verzweigt, eine Anzahl von M*N Steuerventilen, die in den Zweigpfaden der Signalpfade angeordnet sind, wobei jedes Steuerventil einem Zweigpfad zugeordnet ist, und eine Anzahl von N Steuerpfaden zum Schalten der Steuerventile aufweist, wobei jeder Steuerpfad einer Teilanzahl von M Steuerventilen unterschiedlicher Signalpfade zugeordnet ist.

Das Verfahren 300 weist einen Schritt 310 des Schaltens zumindest einer Teilmenge der Steuerventile über zumindest eine Teilmenge der Steuerpfade auf, um die Zweigpfade der Signalpfade zum Ansteuern der Beeinflussungseinrichtungen individuell freizugeben oder zu sperren. Auch weist das Verfahren 300 einen Schritt 320 des Anlegens von Zielzuständen an zumindest eine Teilmenge der Signalpfade auf, um in den Beeinflussungseinrichtungen selektiv die Zielzustände zu bewirken, um den Fluidfluss in der mikrofluidischen Vorrichtung zu steuern.

Gemäß einem Ausführungsbeispiel weist das Verfahren 300 einen Schritt 330 des Erfassens einer Änderung von Zielzuständen der Beeinflussungseinrichtungen, einer Änderung von Schaltzuständen der Steuerpfade und zusätzlich oder alternativ eines Ablaufs von definierbaren Haltezeiten von Zielzuständen auf. Dabei werden der Schritt 310 des Schaltens und der Schritt 320 des Anlegens in Abhängigkeit von einer im Schritt des Erfassens erfassten Änderung und zusätzlich oder alternativ in Abhängigkeit von einem im Schritt des Erfassens erfassten Ablauf durchgeführt.

Auch wenn es in Fig. 3 nicht explizit gezeigt ist, so wird gemäß einer ersten Ausführungsvariante des Verfahrens 300 innerhalb eines Zyklus der Schritt 310 des Schaltens innerhalb eines Toleranzbereichs zeitgleich mit dem Schritt 320 des Anlegens ausgeführt, wobei der Zyklus wiederholt ausgeführt wird. Hierbei werden innerhalb eines Takts eine Anzahl von N Zyklen ausgeführt, wobei in jedem der Zyklen eines Takts im Schritt 310 des Schaltens die Steuerventile eines unterschiedlichen ausgewählten Steuerpfads einmal geschaltet werden, um die den Steuerventilen des ausgewählten Steuerpfads zugeordneten Zweigpfade der Signalpfade freizugeben.

Alternativ wird gemäß einer zweiten Ausführungsvariante des Verfahrens 300 innerhalb eines Zyklus der Schritt 310 des Schaltens vor dem Schritt 320 des Anlegens ausgeführt, wobei der Zyklus wiederholt ausgeführt wird. Hierbei werden innerhalb eines Takts eine Anzahl von N Zyklen ausgeführt, wobei in jedem der Zyklen eines Takts im Schritt 310 des Schaltens die Steuerventile eines unterschiedlichen ausgewählten Steuerpfads einmal geschaltet werden, um die den Steuerventilen des ausgewählten Steuerpfads zugeordneten Zweigpfade der Signalpfade freizugeben.

Gemäß einer dritten Ausführungsvariante des Verfahrens 300 wird innerhalb eines Zyklus der Schritt 310 des Schaltens vor und nach dem Schritt 320 des Anlegens ausgeführt, wobei der Zyklus wiederholt ausgeführt wird. Hierbei werden innerhalb eines Takts eine Anzahl von N Zyklen ausgeführt, wobei in jedem der Zyklen eines Takts im Schritt 310 des Schaltens die Steuerventile eines unterschiedlichen ausgewählten Steuerpfads einmal geschaltet werden, um die den Steuerventilen des ausgewählten Steuerpfads zugeordneten Zweigpfade der Signalpfade freizugeben.

Fig. 4 zeigt ein Prozessablaufschema eines Verfahrens bzw. eines Prozesses 400 zum Steuern eines Fluidflusses in einer mikrofluidischen Vorrichtung gemäß einem Ausführungsbeispiel der vorliegenden Erfindung. Der in dem Prozessablaufschema dargestellte Prozess 400 ist dabei unter Verwendung der mikrofluidischen Vorrichtung aus Fig. 1 sowie in Verbindung mit dem Verfahren aus Fig. 3 durchführbar. Insbesondere ist der Prozess 400 in Verbindung mit der ersten Ausführungsvariante des Verfahrens aus Fig. 3 durchführbar. Hierbei ist in dem Prozessablaufschema von Fig. 4 ein Ablauf des Prozesses 400 innerhalb eines Taktes gezeigt.

Ein Block 401 repräsentiert einen vorherigen Takt des Prozesses 400. In einem Block 402 erfolgt ein Umladen der Steuerpfade bzw. Kontrollpfade, sodass die Steuerventile des ersten Steuerpfads K₁ geöffnet und die Steuerventile des zweiten Steuerpfads K₂ und des dritten Steuerpfads K₃ geschlossen sind. In einem Block 403 werden die Signalpfade S₁ und S₂ umgeladen, insbesondere auf die Zielzustände der Beeinflussungseinrichtungen Z₁₁ und Z₂₁. In einem Block 404 erfolgt ein Umladen der Steuerpfade bzw. Kontrollpfade, sodass die Steuerventile des zweiten Steuerpfads K₂ geöffnet und die Steuerventile des ersten Steuerpfads K₁ und des dritten Steuerpfads K₃ geschlossen sind. In einem Block 405 werden die Signalpfade S₁ und S₂ umgeladen, insbesondere auf die Zielzustände der Beeinflussungseinrichtungen Z₁₂ und Z₂₂. In einem Block 406 erfolgt ein Umladen der Steuerpfade bzw. Kontrollpfade, sodass die Steuerventile des dritten Steuerpfads K₃ geöffnet und die Steuerventile des ersten Steuerpfads K₁ und des zweiten Steuerpfads K₂ geschlossen sind. In einem Block 407 werden die Signalpfade S₁ und S₂ umgeladen, insbesondere auf die Zielzustände der Beeinflussungseinrichtungen Z₁₃ und Z₂₃. Ein Block 408 repräsentiert einen nächsten Takt des Prozesses 400.

Anders ausgedrückt werden bei einer solchen Ansteuerung der Beeinflussungseinrichtungen der mikrofluidischen Vorrichtung zu Beginn eines Taktes die Steuerpfade in dem Block 402 so umgeladen, dass die Steuerventile 120 an dem Steuerpfad K₁ geöffnet sind und die Steuerventile 120 an den Steuerpfaden K₂ und K₃ geschlossen sind. Im Wesentlichen gleichzeitig werden in dem Block 403 die Beeinflussungseinrichtungen Z₁₁ und Z₂₁ über die Signalpfade S₁ und S₂ mit dem gewünschten Druckzustand belegt, wobei die übrigen Beeinflussungseinrichtungen aufgrund der geschlossenen Kontrollventile 120 an den Steuerpfaden K₂ und K₃ ihren Druckzustand beibehalten. Im Block 404 werden dann die Steuerventile 120 an dem Steuerpfad K₁ geschlossen und die Steuerventile 120 an dem Steuerpfad K₂ geöffnet, so dass die Beeinflussungseinrichtungen Z₁₂ und Z₂₂ mit einem Druckzustand belegt werden. Der Takt wird abgeschlossen, nachdem in dem Block 406 auch der Steuerpfad K₃ nach diesem Muster geschalten wurde. Innerhalb eines Taktes können damit die Zielzustände bzw. Druckzustände an allen Beeinflussungseinrichtungen geändert oder aufgefrischt werden. Eine gesamte Taktzeit ergibt sich demnach zu 3*max(Δt_{S}; Δt_{K}), wobei die Schaltzeiten externer Pilotventile hierbei noch unberücksichtigt sind.

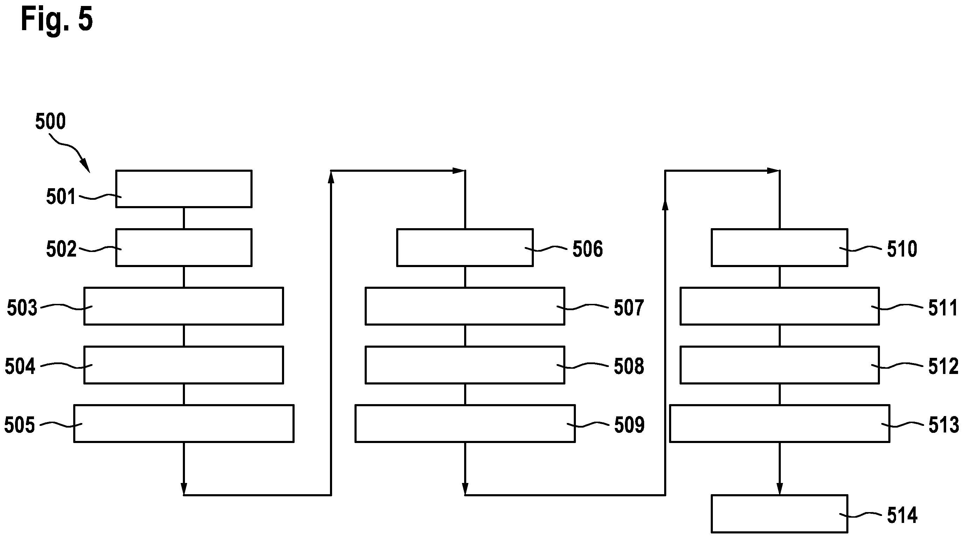

Fig. 5 zeigt ein Prozessablaufschema eines Verfahrens bzw. eines Prozesses 500 zum Steuern eines Fluidflusses in einer mikrofluidischen Vorrichtung gemäß einem Ausführungsbeispiel der vorliegenden Erfindung. Der in dem Prozessablaufschema dargestellte Prozess 500 ist dabei unter Verwendung der mikrofluidischen Vorrichtung aus Fig. 2 sowie in Verbindung mit dem Verfahren aus Fig. 3 durchführbar. Insbesondere ist der Prozess 500 in Verbindung mit der dritten Ausführungsvariante des Verfahrens aus Fig. 3 durchführbar. Hierbei ist in dem Prozessablaufschema von Fig. 5 ein Ablauf des Prozesses 500 innerhalb eines Taktes gezeigt.

Ein Block 501 repräsentiert einen vorherigen Takt des Prozesses 500. In einem Block 502 erfolgt ein Schließen aller Kontrollpfade bzw. Steuerpfade Kⱼ. Dann werden in einem Block 503 die Signalpfade Sᵢ umgeladen. In einem Block 504 wird der Steuerpfad K₁ geöffnet. Somit werden in einem Block 505 die Zielzustandspfade 210 zu den Beeinflussungseinrichtungen Z₁₁ und Z₂₁ umgeladen. Hier endet ein erster Teiltakt bzw. Zyklus des Prozesses 500 und beginnt ein zweiter Zyklus. In einem Block 506 erfolgt erneut ein Schließen aller Kontrollpfade bzw. Steuerpfade Kⱼ. Dann werden in einem Block 507 die Signalpfade Sᵢ umgeladen. In einem Block 508 wird der Steuerpfad K₂ geöffnet. Somit werden in einem Block 509 die Zielzustandspfade 210 zu den Beeinflussungseinrichtungen Z₁₂ und Z₂₂ umgeladen. Hier endet der zweite Zyklus des Prozesses 500 und beginnt ein dritter Zyklus. In einem Block 510 erfolgt wiederum ein Schließen aller Kontrollpfade bzw. Steuerpfade Kⱼ. Dann werden in einem Block 511 die Signalpfade Sᵢ umgeladen. In einem Block 512 wird der Steuerpfad K₃ geöffnet. Somit werden in einem Block 513 die Zielzustandspfade 210 zu den Beeinflussungseinrichtungen Z₁₃ und Z₂₃ umgeladen. Hier endet der dritte Zyklus des Prozesses 500. Ein Block 514 repräsentiert einen nächsten Takt des Prozesses 500.

Anders ausgedrückt wird hierbei das Umladen der Steuerpfade Kⱼ in den Böcken 502, 504, 506, 508, 510 und 512 und das Umladen der Signalpfade Sᵢ in den Böcken 503, 507 und 511 nicht parallel, sondern seriell durchgeführt. Zusätzlich werden zu Beginn eines Zyklus bzw. Teiltaktes in den Blöcken 102, 506 und 510 zunächst alle Steuerpfade Kⱼ geschlossen und anschließend in den Blöcken 503, 507 und 511 die Signalpfade Sᵢ umgeladen. Erst wenn dieser Umladevorgang abgeschlossen ist, wird in einem jeweiligen der Blöcke 504, 508 und 512 der jeweilige Steuerpfad Kⱼ geöffnet und in den Blöcken 505, 509 und 513 die Zielzustandspfade 210 bzw. Beeinflussungseinrichtungen Zᵢⱼ umgeladen. Ein solcher Prozess 500 bzw. eine solche Ansteuerung hat insbesondere den Vorteil, dass aufgrund der Tatsache, dass zunächst in jedem Zyklus die Steuerventile 120 vollständig geschlossen werden, bevor die Signalpfade Sᵢ umgeladen werden, sichergestellt werden kann, dass eingeprägte Druckzustände an den Beeinflussungseinrichtungen Zᵢⱼ durch das Umladen der Signalpfade Sᵢ zunächst unbeeinflusst bleiben. Wäre beispielsweise eines der Steuerventile 120 noch nicht vollständig geschlossen, könnte der Zielzustandspfad 210 teilweise umgeladen werden, obwohl dort beispielsweise ein Druckzustand gehalten werden sollte. Somit erhöht dieser Prozess 500 mit seriellem Umladen eine Stabilität von Druckzuständen an den Beeinflussungseinrichtungen Zᵢⱼ und damit eine Zuverlässigkeit der mikrofluidischen Vorrichtung 100. Eine Gesamtdauer eines Taktes ergibt sich gemäß dem in Fig. 5 dargestellten Ausführungsbeispiel der vorliegenden Erfindung zu 3 * (2Δt_{K} + Δt_{S} + At_{Z}).

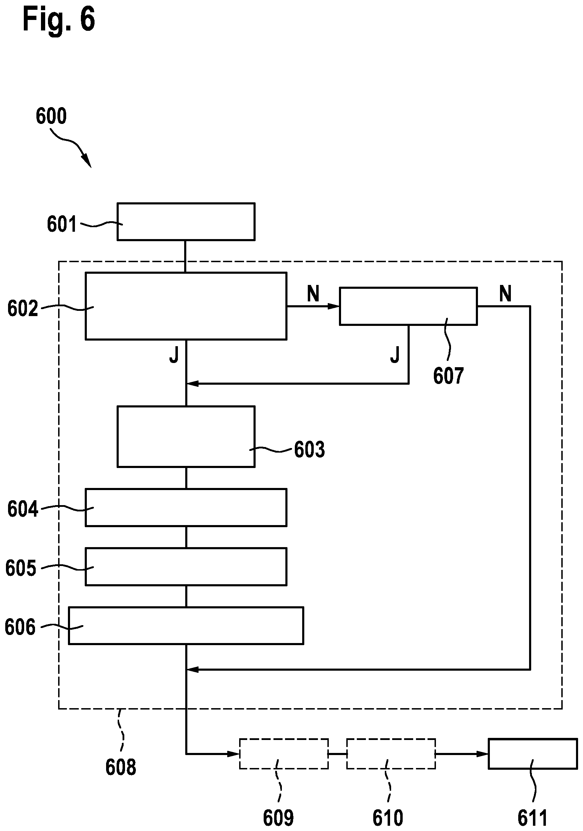

Fig. 6 zeigt ein Prozessablaufschema eines Verfahrens bzw. eines Prozesses 600 zum Steuern eines Fluidflusses in einer mikrofluidischen Vorrichtung gemäß einem Ausführungsbeispiel der vorliegenden Erfindung. Der in dem Prozessablaufschema dargestellte Prozess 600 ist dabei unter Verwendung der mikrofluidischen Vorrichtung aus Fig. 1 bzw. Fig. 2 sowie in Verbindung mit dem Verfahren aus Fig. 3 durchführbar. Hierbei ist in dem Prozessablaufschema von Fig. 6 ein Ablauf des Prozesses 600 innerhalb eines Taktes gezeigt.

Ein Block 601 repräsentiert einen vorherigen Takt des Prozesses 600. In einem Block 602 wird erfasst, ob eine Änderung eines Zielzustandes an der Beeinflussungseinrichtung Z₁₁ oder Z₂₁ seit dem vorherigen Takt aufgetreten ist. Wenn dies der Fall ist, erfolgt in einem Block 603 ein Schließen aller Steuerpfade Kⱼ, gefolgt von einem Umladen der Signalpfade Sᵢ in einem Block 604, einem Öffnen des ersten Steuerpfads K₁ in einem Block 605 sowie einem Umladen der Zielzustandspfade 210 zu den Beeinflussungseinrichtungen Z₁₁ und Z₂₁ in einem Block 606. Wird in dem Block 602 keine Änderung eines Zielzustandes an der Beeinflussungseinrichtung Z₁₁ oder Z₂₁ seit dem vorherigen Takt erfasst, geht der Prozess 600 zu einem Block 607 über, bei dem erfasst wird, ob eine Haltezeit bzw. hierbei eine Druckhaltezeit für den ersten Steuerpfad K₁ abgelaufen ist. Wenn erfasst wird, dass die Druckhaltezeit abgelaufen ist, wird der Prozess 600 bei dem Block 603 fortgesetzt. Wird in dem Block 607 kein Ablauf der Druckhaltezeit erfasst, so überspringt der Prozess 600 die Blöcke 603 bis 606. Hierbei repräsentieren die Blöcke 602 bis 607 einen ersten Zyklus 608 bzw. Teiltakt eines Taktes des Prozesses 600. Der erste Zyklus 608 betrifft den ersten Steuerpfad K₁. Anschließend wird in einem Block 609, der einen zweiten Zyklus eines Taktes des Prozesses 600 repräsentiert, der vorstehend beschriebene Ablauf nun für den zweiten Steuerpfad K₂ analog zu dem ersten Zyklus 608 durchgeführt. In einem Block 610, der einen dritten Zyklus eines Taktes des Prozesses 600 repräsentiert, erfolgt eine Wiederholung des Ablaufs aus dem ersten Zyklus 608 für den dritten Steuerpfad K₃. Ein Block 611 repräsentiert einen nächsten Takt des Prozesses 600.

Anders ausgedrückt wird bei dem Prozess 600 gemäß dem in Fig. 6 gezeigten Ausführungsbeispiel der vorliegenden Erfindung eine Druckhaltezeit berücksichtigt, die angibt, wie lange ein eingeprägter Zielzustand bzw. hier ein eingeprägter Druck zwischen den Steuerventilen 120 und den Beeinflussungseinrichtungen Zᵢⱼ innerhalb definierter Toleranzen gehalten werden kann, wenn die Steuerventile 120 geschlossen sind. Zu Beginn eines Taktes wird im ersten Zyklus 608 in dem Block 602 zunächst erfasst bzw. geprüft, ob sich der Zielzustand bzw. Sollzustand an den Beeinflussungseinrichtungen Z₁₁ oder Z₂₁ geändert hat. Falls ja, erfolgt in den Blöcken 603, 604, 605 und 606 das Schließen der Steuerpfade Kⱼ, Umladen der Signalpfade Sᵢ, Öffnen des Kontrollpfads K₁ und Umladen der Zielzustandspfade 210. Hat sich der Zielzustand an den Beeinflussungseinrichtungen Z₁₁ oder Z₂₁ nicht geändert, wird in dem Block 607 geprüft, ob die Druckhaltezeit abgelaufen ist. Falls nein, ist keine Auffrischung des eingeprägten Druckzustands notwendig und die nachfolgenden Umladeschritte in den Blöcken 603, 604, 605 und 606 werden übersprungen. Anschließend wird dieser Ablauf in den Blöcken 609 und 610 für die Kontrollpfade K₂ und K₃ innerhalb des Taktes wiederholt. Ein solcher Ablauf des Prozesses 600 bietet insbesondere den Vorteil, dass zeitaufwendige Umladevorgänge in vielen Fällen eingespart werden können. Findet beispielsweise keine Änderung der Zielzustände statt, kann während der Druckhaltezeit auf jegliches Schalten innerhalb der Multiplexingstruktur der mikrofluidischen Vorrichtung 100 verzichtet werden. Hierdurch können einerseits Schaltvorgänge externer Pilotventile reduziert und damit eine Zuverlässigkeit eines Gesamtsystems erhöht werden, wobei andererseits beispielsweise eine jeweilige Änderung eines Zielzustands schneller umgesetzt werden kann, da ein entsprechender Steuerpfad Kⱼ direkt geschaltet werden kann, ohne dass die anderen Steuerpfade Kⱼ bedient zu werden brauchen. Eine Gesamtdauer eines Taktes bewegt sich damit zwischen einer Dauer bei dem Prozess aus Fig. 5 für den Fall, dass alle Zielzustände sich innerhalb eines Taktes verändert haben oder die Druckhaltezeit für alle Steuerpfade Kⱼ abgelaufen ist, und einer Dauer gleich oder gegen null für den Fall, dass keine Änderung stattgefunden hat und die Druckhaltezeit nicht abgelaufen ist, wobei die Taktzeit, ohne Berücksichtigung von Berechnungszeiten einer entsprechenden Software, im Wesentlichen verschwindet.

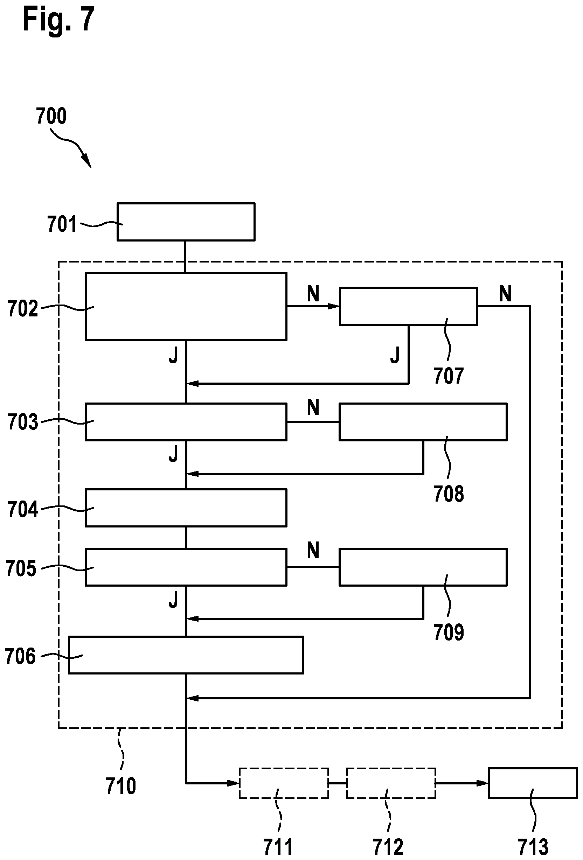

Fig. 7 zeigt ein Prozessablaufschema eines Verfahrens bzw. eines Prozesses 700 zum Steuern eines Fluidflusses in einer mikrofluidischen Vorrichtung gemäß einem Ausführungsbeispiel der vorliegenden Erfindung. Der in dem Prozessablaufschema dargestellte Prozess 700 ist dabei unter Verwendung der mikrofluidischen Vorrichtung aus Fig. 1 bzw. Fig. 2 sowie in Verbindung mit dem Verfahren aus Fig. 3 durchführbar. Hierbei ist in dem Prozessablaufschema von Fig. 7 ein Ablauf des Prozesses 700 innerhalb eines Taktes gezeigt.

Ein Block 701 repräsentiert einen vorherigen Takt des Prozesses 700. In einem Block 702 wird erfasst, ob eine Änderung eines Zielzustandes an der Beeinflussungseinrichtung Z₁₁ oder Z₂₁ seit dem vorherigen Takt aufgetreten ist.

Wenn eine Änderung aufgetreten ist, erfolgt in einem Block 703 eine Überprüfung dahin gehend, ob der erste Steuerpfad K₁ bereits geöffnet ist. Wenn festgestellt wird, dass der erste Steuerpfad K₁ bereits geöffnet ist, werden in einem Block 704 die Signalpfade Sᵢ umgeladen. Daraufhin wird in einem Block 705 wiederum geprüft, ob der erste Steuerpfad K₁ bereits geöffnet ist. Wenn festgestellt wird, dass der erste Steuerpfad K₁ bereits geöffnet ist, erfolgt in einem Block 706 Umladen der Zielzustandspfade 210 zu den Beeinflussungseinrichtungen Z₁₁ und Z₂₁. Wird in dem Block 702 keine Änderung eines Zielzustandes an der Beeinflussungseinrichtung Z₁₁ oder Z₂₁ seit dem vorherigen Takt erfasst, geht der Prozess 700 zu einem Block 707 über, bei dem erfasst wird, ob eine Haltezeit bzw. hierbei eine Druckhaltezeit für den ersten Steuerpfad K₁ abgelaufen ist. Wenn erfasst wird, dass die Druckhaltezeit abgelaufen ist, wird der Prozess 700 bei dem Block 703 fortgesetzt. Wird in dem Block 707 kein Ablauf der Druckhaltezeit erfasst, so überspringt der Prozess 700 die Blöcke 703 bis 706. Wenn in dem Block 703 festgestellt wird, dass der erste Steuerpfad K₁ nicht bereits geöffnet ist, folgt vor dem Block 704 ein Block 708, in dem ein Schließen aller Steuerpfade Kⱼ durchgeführt wird. Wenn in dem Block 705 festgestellt wird, dass der erste Steuerpfad K₁ nicht bereits geöffnet ist, folgt vor dem Block 706 ein Block 709, in dem der Steuerpfad K₁ geöffnet wird. Hierbei repräsentieren die Blöcke 702 bis 709 einem ersten Zyklus 710 bzw. Teiltakt eines Taktes des Prozesses 700. Der erste Zyklus 710 betrifft den ersten Steuerpfad K₁. Anschließend wird in einem Block 711, der einen zweiten Zyklus eines Taktes des Prozesses 700 repräsentiert, der vorstehend beschriebene Ablauf nun für den zweiten Steuerpfad K₂ analog zu dem ersten Zyklus 710 durchgeführt. In einem Block 712, der einen dritten Zyklus eines Taktes des Prozesses 700 repräsentiert, erfolgt eine Wiederholung des Ablaufs aus dem ersten Zyklus 710 für den dritten Steuerpfad K₃. Ein Block 713 repräsentiert einen nächsten Takt des Prozesses 700.

Anders ausgedrückt wird bei einem solchen Prozess 700 zur Ansteuerung vor dem Schließen aller Steuerpfade Kⱼ geprüft, ob ein in dem jeweiligen Zyklus 610, 611 oder 612 behandelter Steuerpfad nicht ohnehin bereits geöffnet ist. Dies kann beispielsweise für den ersten Steuerpfad K₁ der Fall sein, falls innerhalb der Druckhaltezeit an dem zweiten Steuerpfad K₂ und dem dritten Steuerpfad K₃ keine Schaltvorgänge stattgefunden haben. In diesem Fall kann von einem Schließen aller Steuerpfade Kⱼ abgesehen werden, da die Signalpfade Sᵢ seit dem letzten Takt immer noch den gleichen Zielzustand bzw. Druckzustand aufweisen. In diesem Fall können die Signalpfade Sᵢ direkt umgeladen werden, wobei ein nachfolgendes Öffnen des ersten Steuerpfads K₁ übersprungen werden kann. Ändern sich innerhalb der Druckhaltezeit nur Zielzustände an Beeinflussungseinrichtungen Zᵢⱼ, die von einem einzigen Steuerpfad Kⱼ gesteuert werden, ergibt sich somit insbesondere der Vorteil, dass die Steuerventile 120 an diesem Steuerpfad Kⱼ kontinuierlich geöffnet bleiben können. Dadurch, dass die Zielzustände bzw. Druckzustände der Signalpfade Sᵢ hiermit direkt auf die Beeinflussungseinrichtungen Zᵢⱼ wirken, können diese jeweils innerhalb Δt_{S} umgeladen werden. Damit lassen sich innerhalb einer Multiplexing-Ansteuerung gemäß dem in Fig. 7 dargestellten Prozess 700 insgesamt eine Anzahl von M Beeinflussungseinrichtungen mit Frequenzen ansteuern bzw. betreiben, die vergleichbar mit einer direkten Ansteuerung ohne Multiplexer sind. Dies ist beispielsweise für Anwendungen relevant, bei denen ein überwiegender Teil von Ventilzuständen konstant bleibt und wenige Elemente schnell geschaltet werden sollen. Ein Beispiel hierfür ist eine Membranpumpe, die Flüssigkeit z. B. in einem abgeschlossenen Kreislauf transportiert. Solche Membranpumpen werden häufig mit hohen Frequenzen von beispielsweise 1 Hz bis 10 Hz betrieben.

Membranpumpen werden häufig insbesondere auch zum Abmessen von gepumpten Flüssigkeitsvolumina genutzt, indem eine Anzahl an Pumphüben gezählt und mit einem Volumen einer Verdrängungskammer multipliziert wird. Ein solches so genanntes Metering ist möglich, wenn eine flexible Membran der Verdrängungskammer während jedes Pumphubs vollständig in die Verdrängungskammer ausgelenkt wird und sich danach wieder vollständig zurückzieht. Dies ist unter Verwendung von Ausführungsbeispielen der vorliegenden Erfindung gegeben. Es ergibt sich dabei eine minimale Zeitdauer Δtₐᵤₛₗ, während derer ein Druckzustand auf die Verdrängungskammer wirken soll. Würde ein Zielzustand mit einer Periodendauer <2Δtₐᵤₛₗ geändert, bestünde die Möglichkeit, dass, beispielsweise aufgrund einer notwendigen Auffrischung eines anderen Steuerpfads, ein Schaltvorgang verzögert gestartet würde und damit effektiv <Δtₐᵤₛₗ wirken würde. Es ist deshalb besonders vorteilhaft, Soll- und Ist-Zustände zu vergleichen und den Sollzustand bzw. Zielzustand während eines Pumpvorgangs erst dann zu ändern, wenn ein vorheriger Sollzustand bereits mindestens Δtₐᵤₛₗ auf die Verdrängungskammer gewirkt hat. Hierdurch wird ein Abmessen bzw. Metering mittels Pumphüben innerhalb einer Multiplexing-Umgebung ermöglicht.

Im Folgenden werden Eigenschaften von Ausführungsbeispielen der vorliegenden Erfindung unter Bezugnahme auf die Figuren 1 bis 7 zusammenfassend und in anderen Worten nochmals erläutert.

Die Ansteuerungsvorgänge bzw. das Verfahren 300 zum Steuern aus Fig. 3 bzw. die Prozesse 400, 500, 600 bzw. 700 aus Fig. 4, Fig. 5, Fig. 6 bzw. Fig. 7 basieren auf einer in Fig. 1 bzw. Fig. 2 gezeigten beschriebenen mikrofluidischen Vorrichtung 100 mit einem Multiplexer mit M Signalpfaden Sᵢ und N Kontrollpfaden Kⱼ. Eine Druckzufuhr für jede Beeinflussungseinrichtung Zᵢⱼ, bei der es sich z. B. um ein Ventil oder eine Verdrängungskammer einer Membranpumpe handeln kann, wird dabei von einem Steuerventil 120 gesteuert. Ein Durchtakten der Steuerpfade Kⱼ erlaubt es, jeweils einen gewünschten Zielzustand bzw. Druckzustand der Signalpfade Sᵢ an beabsichtigte Beeinflussungseinrichtungen Zᵢⱼ weiterzuleiten.

Beispielhafte Abmessungen eines Mehrschichtaufbaus der mikrofluidischen Vorrichtung 100 umfassen insbesondere eine Dicke von Polymersubstraten zwischen 0,1 Millimeter und 10 Millimeter, bevorzugt zwischen 1 Millimeter und 3 Millimeter, eine Dicke einer Polymermembran zwischen 5 Mikrometer und 500 Mikrometer, bevorzugt zwischen 50 Mikrometer und 150 Mikrometer, Kanalquerschnitte von 10*10 Quadratmikrometer bis 3*3 Quadratmillimeter, bevorzugt von 100*100 Quadratmikrometer bis 1*1 Quadratmillimeter, sowie laterale Abmessungen von 10*10 Quadratmillimeter bis 200*200 Quadratmillimeter, bevorzugt von 50*50 Quadratmillimeter bis 100*100 Quadratmillimeter. Beispielhafte charakteristische Zeiten umfassen insbesondere Umladezeiten Δt_{K}, Δt_{S}, Δt_{Z}: von 1 Mikrosekunde bis 300 Mikrosekunden sowie eine Haltezeit bzw. Druckhaltezeit von 1 Sekunde bis 30 Minuten.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Mikrofluidische Vorrichtung (100), die eine Anzahl von Beeinflussungseinrichtungen (Zᵢⱼ) zum Beeinflussen eines Fluidflusses in der mikrofluidischen Vorrichtung (100) aufweist, wobei die mikrofluidische Vorrichtung (100) folgende Merkmale aufweist:
eine Anzahl von Signalpfaden (Sᵢ) zum Ansteuern der Beeinflussungseinrichtungen (Zᵢⱼ), wobei jeder Signalpfad (Sᵢ) zumindest eine Anzahl von Zweigpfaden (110; 210) zu zumindest einer der Beeinflussungseinrichtungen (Zᵢⱼ) umfasst;
eine Anzahl von Steuerventilen (120), die in zumindest einigen Zweigpfaden (110; 210) der Signalpfade (Sᵢ) angeordnet sind, wobei zumindest eines der Anzahl von Steuerventilen (120) einem Zweigpfad (110; 210) zugeordnet ist;
**gekennzeichnet durch**
eine Anzahl von Steuerpfaden (Kⱼ) zum Schalten zumindest einiger der Steuerventile (120), wobei zumindest ein Steuerpfad (Kⱼ) Steuerventilen (120) unterschiedlicher Signalpfade (Sᵢ) zugeordnet ist; und
eine Anzahl von Signalpfad-Schnittstellen (130) zum Anlegen von Zielzuständen an die Signalpfade (Sᵢ), wobei jede Signalpfad-Schnittstelle (130) einem der Signalpfade (Sᵢ) zugeordnet ist, und eine Anzahl von Steuerpfad-Schnittstellen (140) zum Schalten der Steuerventile (120) über die Steuerpfade (Kⱼ), wobei jede Steuerpfad-Schnittstelle (140) einem der Steuerpfade (Kⱼ) zugeordnet ist.

2. Mikrofluidische Vorrichtung (100) gemäß Anspruch 1, bei der die Beeinflussungseinrichtungen (Zᵢⱼ) Ventile und/oder Fördereinrichtungen aufweisen, wobei die Signalpfade (Sᵢ) als Fluidleitungen ausgeformt sind, wobei die Steuerpfade (Kⱼ) als Fluidleitungen ausgeformt sind und/oder wobei die Steuerventile (120) als Membranventile ausgeführt sind.

3. Verfahren (300; 400; 500; 600; 700) zum Steuern eines Fluidflusses in einer mikrofluidischen Vorrichtung (100), die eine Anzahl von Beeinflussungseinrichtungen (Zᵢⱼ) zum Beeinflussen eines Fluidflusses in der mikrofluidischen Vorrichtung (100), eine Anzahl von Signalpfaden (Sᵢ) zum Ansteuern der Beeinflussungseinrichtungen (Zᵢⱼ), wobei jeder Signalpfad (Sᵢ) zumindest eine Anzahl von Zweigpfaden (110; 210) zu zumindest einer der Beeinflussungseinrichtungen (Zᵢⱼ) umfasst, eine Anzahl von Steuerventilen (120), die in zumindest einigen der Zweigpfade (110; 210) der Signalpfade (Sᵢ) angeordnet sind, wobei zumindest eines der Anzahl von Steuerventilen (120) einem Zweigpfad (110; 210) zugeordnet ist, und eine Anzahl von Steuerpfaden (Kⱼ) zum Schalten zumindest einiger der Steuerventile (120) aufweist, wobei zumindest ein Steuerpfad (Kⱼ) Steuerventilen (120) unterschiedlicher Signalpfade (Sᵢ) zugeordnet ist, und eine Anzahl von Signalpfad-Schnittstellen (130) zum Anlegen von Zielzuständen an die Signalpfade (Sᵢ), wobei jede Signalpfad-Schnittstelle (130) einem der Signalpfade (Sᵢ) zugeordnet ist, und eine Anzahl von Steuerpfad-Schnittstellen (140) zum Schalten der Steuerventile (120) über die Steuerpfade (Kⱼ) aufweist, wobei jede Steuerpfad-Schnittstelle (140) einem der Steuerpfade (Kⱼ) zugeordnet ist, und wobei das Verfahren (300; 400; 500; 600; 700) folgende Schritte aufweist:
Schalten (310; 402, 404, 406; 502, 504, 506, 508, 510, 512; 603, 605; 708, 709) zumindest einer Teilmenge der Steuerventile (120) über zumindest eine Teilmenge der Steuerpfade (Kⱼ), um die Zweigpfade (110; 210) der Signalpfade (Sᵢ) zum Ansteuern der Beeinflussungseinrichtungen (Zᵢⱼ) individuell freizugeben oder zu sperren; und
Anlegen (320; 403, 405, 407; 503, 507, 511; 604; 704) von Zielzuständen an zumindest eine Teilmenge der Signalpfade (Sᵢ), um in den Beeinflussungseinrichtungen (Zᵢⱼ) selektiv die Zielzustände zu bewirken, um den Fluidfluss zu steuern

4. Verfahren (300; 400; 500; 600; 700) gemäß Anspruch 3, bei dem innerhalb eines Zyklus der Schritt (310; 402, 404, 406) des Schaltens innerhalb eines Toleranzbereichs zeitgleich mit dem Schritt (320; 403, 405, 407) des Anlegens oder der Schritt (310; 502, 504, 506, 508, 510, 512; 603, 605; 708, 709) des Schaltens vor und/oder nach dem Schritt des Anlegens (320; 503, 507, 511; 604; 704) ausgeführt wird, wobei der Zyklus wiederholt ausgeführt wird.

5. Verfahren (300; 400; 500; 600; 700) gemäß Anspruch 4, bei dem innerhalb eines Takts eine Anzahl von Zyklen ausgeführt werden, wobei in jedem der Zyklen eines Takts im Schritt (310; 402, 404, 406; 504, 508, 512; 605; 709) des Schaltens die Steuerventile (120) eines unterschiedlichen ausgewählten Steuerpfads (Kⱼ) einmal geschaltet werden, um die den Steuerventilen (120) des ausgewählten Steuerpfads (Kⱼ) zugeordneten Zweigpfade (110; 210) der Signalpfade (Sᵢ) freizugeben.

6. Verfahren (300; 600; 700) gemäß einem der Ansprüche 3 bis 5, mit einem Schritt (330; 602, 607; 702, 703, 705, 707) des Erfassens einer Änderung von Zielzuständen der Beeinflussungseinrichtungen (Zᵢⱼ), einer Änderung von Schaltzuständen der Steuerpfade (Kⱼ) und/oder eines Ablaufs von definierbaren Haltezeiten von Zielzuständen, wobei der Schritt (310; 603, 605; 708, 709) des Schaltens und der Schritt (320; 604; 704) des Anlegens in Abhängigkeit von einer im Schritt (330; 602; 702, 703, 705) des Erfassens erfassten Änderung und/oder in Abhängigkeit von einem im Schritt (330; 607; 707) des Erfassens erfassten Ablauf durchgeführt werden.

7. Vorrichtung, die ausgebildet ist, um alle Schritte eines Verfahrens (300; 400; 500; 600; 700) gemäß einem der Ansprüche 3 bis 6 durchzuführen.

8. Computerprogramm, das dazu eingerichtet ist, alle Schritte eines Verfahrens (300; 400; 500; 600; 700) gemäß einem der Ansprüche 4 bis 6 durchzuführen.

9. Maschinenlesbares Speichermedium mit einem darauf gespeicherten Computerprogramm nach Anspruch 8.

## Claims

1. Microfluidic apparatus (100) which has a number of influencing devices (Zᵢⱼ) for influencing a fluid flow in the microfluidic apparatus (100), wherein the microfluidic apparatus (100) has the following features:
a number of signal paths (Sᵢ) for the activation of the influencing devices (Zᵢⱼ), wherein each signal path (Sᵢ) comprises at least a number of branch paths (110; 210) to at least one of the influencing devices (Zᵢⱼ) ;
a number of control valves (120) which are arranged in at least some branch paths (110; 210) of the signal paths (Sᵢ), wherein at least one of the number of control valves (120) is assigned to a branch path (110; 210);
**characterized by**
a number of control paths (Kⱼ) for the switching of at least some of the control valves (120), wherein at least one control path (Kⱼ) is assigned to control valves (120) of different signal paths (Sᵢ) ; and
a number of signal path interfaces (130) for applying target states to the signal paths (Sᵢ), wherein each signal path interface (130) is assigned to one of the signal paths (Sᵢ), and a number of control path interfaces (140) for switching the control valves (120) via the control paths (Kⱼ), wherein each control path interface (140) is assigned to one of the control paths (Kⱼ).

2. Microfluidic apparatus (100) according to Claim 1, in which the influencing devices (Zᵢⱼ) have valves and/or conveying devices, wherein the signal paths (Sᵢ) are formed as fluid lines, wherein the control paths (Kⱼ) are formed as fluid lines and/or wherein the control valves (120) are formed as diaphragm valves.

3. Method (300; 400; 500; 600; 700) for controlling a fluid flow in a microfluidic apparatus (100) having a number of influencing devices (Zᵢⱼ) for influencing a fluid flow in the microfluidic apparatus (100), having a number of signal paths (Sᵢ) for the activation of the influencing devices (Zᵢⱼ), wherein each signal path (Sᵢ) comprises at least a number of branch paths (110; 210) to at least one of the influencing devices (Zᵢⱼ), having a number of control valves (120) which are arranged in at least some of the branch paths (110; 210) of the signal paths (Sᵢ), wherein at least one of the number of control valves (120) is assigned to a branch path (110; 210), and having a number of control paths (Kⱼ) for the switching of at least some of the control valves (120), wherein at least one control path (Kⱼ) is assigned to control valves (120) of different signal paths (Sᵢ), and having a number of signal path interfaces (130) for applying target states to the signal paths (Sᵢ), wherein each signal path interface (130) is assigned to one of the signal paths (Sᵢ), and having a number of control path interfaces (140) for switching the control valves (120) via the control paths (Kⱼ), wherein each control path interface (140) is assigned to one of the control paths (Kⱼ), and wherein the method (300; 400; 500; 600; 700) has the following steps:
switching (310; 402, 404, 406; 502, 504, 506, 508, 510, 512; 603, 605; 708, 709) of at least a subset of the control valves (120) via at least a subset of the control paths (Kⱼ) in order to release, or to block, individually the branch paths (110; 210) of the signal paths (Sᵢ) for the activation of the influencing devices (Zᵢⱼ) ; and
applying (320; 403, 405, 407; 503, 507, 511; 604; 704) of target states to at least a subset of the signal paths (Sᵢ) in order to bring about selectively the target states in the influencing devices (Zᵢⱼ) for the purpose of controlling the fluid flow.

4. Method (300; 400; 500; 600; 700) according to Claim 3, in which, within one cycle, the step (310; 402, 404, 406) of switching is, within a tolerance range, carried out at the same time as the step (320; 403, 405, 407) of applying, or the step (310; 502, 504, 506, 508, 510, 512; 603, 605; 708, 709) of switching is carried out before and/or after the step (320; 503, 507, 511; 604; 704) of applying, wherein the cycle is carried out repeatedly.

5. Method (300; 400; 500; 600; 700) according to Claim 4, in which, within one clock period, a number of cycles are carried out, wherein, in each of the cycles of a clock period, in the step (310; 402, 404, 406; 504, 508, 512; 605; 709) of switching, the control valves (120) of a different selected control path (Kⱼ) are switched once in order to release the branch paths (110; 210), assigned to the control valves (120) of the selected control path (Kⱼ), of the signal paths (Sᵢ).

6. Method (300; 600; 700) according to one of Claims 3 to 5, having a step (330; 602, 607; 702, 703, 705, 707) of detecting of a change in target states of the influencing devices (Zᵢⱼ), a change in switching states of the control paths (Kⱼ) and/or an expiry of definable holding times of target states, wherein the step (310; 603, 605; 708, 709) of switching and the step (320; 604; 704) of applying are carried out in dependence on a change detected in the step (330; 602; 702, 703; 705) of detecting and/or in dependence on an expiry detected in the step (330; 607; 707) of detecting.

7. Device which is designed to carry out all the steps of a method (300; 400; 500; 600; 700) according to one of Claims 3 to 6.

8. Computer program which is designed to carry out all the steps of a method (300; 400; 500; 600; 700) according to one of Claims 4 to 6.

9. Machine-readable storage medium having a computer program according to Claim 8 stored thereon.

## Revendications

1. Ensemble microfluide (100) présentant plusieurs dispositifs d'action (Zᵢⱼ) qui agissent sur un écoulement de fluide dans l'ensemble microfluide (100), l'ensemble microfluide (100) présentant les caractéristiques suivantes :
plusieurs parcours de signaux (Si) qui commandent les dispositifs d'action (Zᵢⱼ), chaque parcours de signaux (Sᵢ) comportant au moins plusieurs parcours de dérivation (110 ; 210) conduisant à au moins l'un des dispositifs d'action (Zᵢⱼ),
plusieurs soupapes de commande (120) disposées dans au moins certains parcours de dérivation (110 ; 210) des parcours de signaux (Sᵢ), au moins l'une des différentes soupapes de commande (120) étant associées à un parcours de dérivation (110 ; 210),
**caractérisé par**
plusieurs parcours de commande (Kⱼ) qui commutent au moins certaines des soupapes de commande (120), au moins un parcours de commande (Kⱼ) étant associé à des soupapes de commande (120) de parcours de signaux (Sᵢ) différents,
plusieurs interfaces (130) de parcours de signaux qui appliquent des états-cibles sur les parcours de signaux (Sᵢ), chaque interface (130) de parcours de signaux étant associée à l'un des parcours de signaux (Sᵢ), et
plusieurs interfaces (140) de parcours de commande qui commutent les soupapes de commande (120) par l'intermédiaire des parcours de commande (Kⱼ), chaque interface (140) de parcours de commande étant associée à l'un des parcours de commande (Kⱼ).

2. Ensemble microfluide (100) selon la revendication 1, dans lequel les dispositifs d'action (Zᵢⱼ) présentent des soupapes et/ou des dispositifs de refoulement, le parcours de signaux (Sᵢ) étant configurés comme conduits de fluide, les parcours de commande (Kⱼ) étant configurés comme conduits de fluide et/ou les soupapes de commande (120) étant réalisées sous la forme de soupapes à membrane.

3. Procédé (300 ; 400 ; 500 ; 600 ; 700) de commande d'un écoulement de fluide dans un ensemble microfluide (100), présentant plusieurs dispositifs d'action (Zᵢⱼ) qui agissent sur un écoulement de fluide dans l'ensemble microfluide (100), l'ensemble microfluide (100) présentant les caractéristiques suivantes :
plusieurs parcours de signaux (Sᵢ) qui commandent les dispositifs d'action (Zᵢⱼ), chaque parcours de signaux (Sᵢ) comportant au moins plusieurs parcours de dérivation (110 ; 210) conduisant à au moins l'un des dispositifs d'action (Zᵢⱼ),
plusieurs soupapes de commande (120) disposées dans au moins certains parcours de dérivation (110 ; 120) des parcours de signaux (Sᵢ), au moins l'une des différentes soupapes de commande (120) étant associées à un parcours de dérivation (110 ; 210),
plusieurs parcours de commande (Kⱼ) qui commutent au moins certaines des soupapes de commande (120), au moins un parcours de commande (Kⱼ) étant associé à des soupapes de commande (120) de parcours de signaux (Sᵢ) différents,
plusieurs interfaces (130) de parcours de signaux qui appliquent des états-cibles sur les parcours de signaux (Sᵢ), chaque interface (130) de parcours de signaux étant associée à l'un des parcours de signaux (Sᵢ), et
plusieurs interfaces (140) de parcours de commande qui commutent les soupapes de commande (120) par l'intermédiaire des parcours de commande (Kⱼ), chaque interface (140) de parcours de commande étant associée à l'un des parcours de commande (Kⱼ),
le procédé (300 ; 400 ; 500 ; 600 ; 700) présentant les étapes suivantes :
commutation (310 ; 402, 404, 406 ; 502, 504, 506, 508, 510, 512 ; 603, 605 ; 708, 709) d'au moins une partie des soupapes de commande (120) par l'intermédiaire d'au moins une partie des parcours de commande (Kⱼ) pour libérer ou bloquer individuellement les parcours de dérivation (110 ; 210) des parcours de signaux (Sᵢ) qui commandent les dispositifs d'action (Zᵢⱼ) et
application (320 ; 403, 405, 407 ; 503, 507, 511 ; 604 ; 704) d'états-cibles sur au moins une partie des parcours de signaux (Sᵢ) pour obtenir sélectivement les états-cibles dans les dispositifs d'action (Zᵢⱼ) et ainsi commander l'écoulement de fluide.

4. Procédé (300 ; 400 ; 500 ; 600 ; 700) selon la revendication 3, dans lequel à l'intérieur d'un cycle, l'étape de commutation (310 ; 402, 404, 406) est réalisée à l'intérieur d'une plage de tolérance en même temps que l'étape d'application (320 ; 403, 405, 407) ou l'étape de commutation (310 ; 502, 504, 506, 508, 510, 512 ; 603, 605 ; 708, 709) est réalisée avant et/ou après l'étape d'application (320 ; 503, 507, 511 ; 604 ; 704), le cycle étant réalisé à répétition.

5. Procédé (300 ; 400 ; 500 ; 600 ; 700) selon la revendication 4, dans lequel plusieurs cycles sont réalisés au cours d'un pas, les soupapes de commande (120) d'un parcours de commande (Kⱼ) différent sélectionné étant commutées une fois dans chacun des cycles d'un pas à l'étape de commutation (310 ; 402, 404, 406 ; 504, 508, 512 ; 605 ; 709) pour libérer les parcours de dérivation (110 ; 210) associés aux soupapes de commande (120) du parcours de commande (Kⱼ) sélectionné, des parcours de signaux (Sᵢ).

6. Procédé (300 ; 600 ; 700) selon l'une des revendications 3 à 5, présentant une étape (330 ; 602, 607 ; 702, 703, 705, 707) de saisie d'une modification d'états-cibles des dispositifs d'action (Zᵢⱼ), d'une modification des états de commutation des parcours de commande (Kⱼ) et/ou de l'écoulement de durées de maintien d'états-cibles, l'étape de commutation (310 ; 603, 605 ; 708, 709) et l'étape d'application (320 ; 604 ; 704) étant réalisées en fonction d'une modification saisie à l'étape de saisie (330 ; 602 ; 702, 703, 705) et/ou en fonction de l'écoulement d'une durée à l'étape de saisie (330 ; 607 ; 707).

7. Ensemble configuré pour exécuter toutes les étapes d'un procédé (300 ; 400 ; 500 ; 600 ; 700) selon l'une des revendications 3 à 6.

8. Programme informatique conçu pour exécuter toutes les étapes d'un procédé (300 ; 400 ; 500 ; 600 ; 700) selon l'une des revendications 4 à 6.

9. Support de mémoire lisible par machine et sur lequel un programme informatique selon la revendication 8 est conservé.
